(19) Europäisches Patentamt / European Patent Office / Office européen des brevets

(11) **EP 4 632 431 A1**

(12) # EUROPEAN PATENT APPLICATION

(43) Date of publication:
**15.10.2025 Bulletin 2025/42**

(21) Application number: **24212612.6**

(22) Date of filing: **13.11.2024**

(51) International Patent Classification (IPC):
**G01S 13/72** (2006.01)     **G01S 7/41** (2006.01)
**G01S 13/931** (2020.01)     **G06N 3/045** (2023.01)
**G01S 13/58** (2006.01)

(52) Cooperative Patent Classification (CPC):
**G01S 13/931; G01S 7/417; G01S 13/584;
G01S 13/726; G06N 3/044; G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.04.2024 US 202418630640**

(71) Applicant: **Aptiv Technologies AG
8200 Schaffhausen (CH)**

(72) Inventors:
• **HU, Lingnan
  San Gabriel, CA, 91776 (US)**
• **SONG, Sanling
  Northport, AL, 35475 (US)**

(74) Representative: **Manitz Finsterwald
Patent- und Rechtsanwaltspartnerschaft mbB
Martin-Greif-Straße 1
80336 München (DE)**

(54) **HYBRID NEURAL NETWORK-BASED OBJECT TRACKING WITH BOUNDING BOX STATE ESTIMATION FROM A SPARSE RADAR DETECTION DISTRIBUTION**

(57)     A driver assistance system includes: a hybrid object tracking module comprising i) a radar detection module configured to receive a sparse radar detection distribution including radar detections based on a radar signal emitted from a host vehicle, ii) an object parameter determining module configured to generate an object track including centroid information for a detected object relative to the host vehicle, and iii) multiple modules implementing a deep neural network model and including neural networks, the deep neural network model configured to generate an estimate state of a bounding box and a confidence level of the estimated state of the bounding box based on the radar detections and the centroid information; and a driver assistance module configured to perform driver assistance operations based on the estimated state of the bounding box and the confidence level.

**EP 4 632 431 A1**

**Description**

FIELD

The present disclosure relates to advanced driver assistance systems (ADASs) and collision avoidance systems, and more particularly to object tracking systems.

BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

An ADAS assists a vehicle occupant (e.g., a driver) in driving a host vehicle. The host vehicle may be a partially or fully autonomous vehicle, whereby a controller controls operation of vehicle systems such as steering, braking and propulsion systems to drive the vehicle. The control may be performed based on objects detected via an object detection system. The controller performs operations based on a known, planned, and/or predicted trajectories of the host vehicle and the detected objects to prevent collisions.

SUMMARY

A driver assistance system is disclosed and includes: a hybrid object tracking module including i) a radar detection module configured to receive a sparse radar detection distribution including radar detections based on a radar signal emitted from a host vehicle, ii) an object parameter determining module configured to generate an object track including centroid information for a detected object relative to the host vehicle, and iii) multiple modules implementing a deep neural network model and including neural networks, the deep neural network model configured to generate an estimate state of a bounding box and a confidence level of the estimated state of the bounding box based on the radar detections and the centroid information; and a driver assistance module configured to perform driver assistance operations based on the estimated state of the bounding box and the confidence level.

In other features, the sparse radar detection distribution includes only peak radar detections. The modules are configured to generate the estimated state of the bounding box and the confidence level based on the peak radar detections.

In other features, the multiple modules include: a recurrent track feature abstractor module configured to generate hidden features based on the object track; and an object centroid head module configured to estimate a position and a velocity of a centrode of the bounding box. The estimated state of the bounding box includes the estimated position and the estimated velocity.

In other features, the object centroid head module includes: a first concatenator configured to receive and concatenate inputs including the hidden features; fully connected layers and a rectified linear unit configured to receive an output of the first concatenator; a fully connected layer configured to receive an output of the fully connected layers and the rectified linear unit; and a summer configured to add an absolute position of a centroid of the object track to an output of the fully connected layer to provide the estimated position of the bounding box.

In other features, the multiple modules include a feature backbone module configured, based on the sparse radar detection distribution, to extract recurrent feature information of the detected object to generate multiple features. The inputs include the features output by the feature backbone module.

In other features, the multiple modules include an object regression head module including regression heads. The regression heads are configured to estimate parameters of the bounding box based on the features.

In other features, the regression heads include: a yaw angle regression head configured, based on the features, to estimate a yaw angle of the bounding box; a size regression head configured, based on the features, to estimate a size of the bounding box; and an object classification regression head configured, based on the features, to estimate a classification of the bounding box and a probability of the classification. The estimate of the state of the bounding box includes the estimated yaw angle, the size, the classification and the probability of the classification.

In other features, the modules include an estimation confidence head module configured to generate the confidence level based on at least one of i) the features, ii) the yaw angle, iii) the size, iv) the position, and v) the velocity.

In other features, the estimation confidence head module includes: a second concatenator configured to concatenate the features, the estimated yaw angle, the estimated size, position and velocity to provide a concatenated output; and fully connected layers and a rectified linear unit configured, based on the concatenated output, to generate the confidence level.

In other features, the yaw angle regression head includes first fully connected layers and a first rectified linear unit. The size regression head includes second fully connected layers and a second rectified linear unit. The object classification regression head includes third fully connected layers and a support vector machine.

In other features, the multiple modules include a detection offset accumulator module configured to i) subtract the absolute position of the object track centroid from absolute positions of the radar detections to generate relative positions, and ii) accumulate the relative positions. The feature backbone module is configured, based on the accumulated relative positions, extract recurrent feature information of the detected object to generate the features output by the feature backbone module.

In other features, the hybrid object tracking module further includes: a ground truth comparison module configured, during at least one of calibration and training of the deep neural network model, to compare an output of a first one or more of the multiple modules to a ground truth and generate an error value based on a result of the comparison; and a loss function module configured to adjust operation of a second one or more of the multiple modules based on the error value.

In other features, a vehicle system is disclosed and includes: the driver assistance system; a steering system; a braking system; and a propulsion system. The driver assistance module controls operations of at least one of the steering system, the braking system, and the propulsion system based on the estimated state of the bounding box and the confidence level.

In other features, a vehicle system is disclosed and includes: the driver assistance system; and a radar sensor configured to generate the radar signal and generate the radar detections based on reflection of the radar signal off at least one of the detected object and one or more other objects.

In other features, a driver assistance method is disclosed and includes: receiving reflections of a radar signal emitted from a host vehicle; generating a sparse radar detection distribution including radar detections based on the received reflections of the radar signal, generating an object track including centroid information for a detected object relative to the host vehicle; implementing via multiple modules, a deep neural network model including neural networks, the deep neural network model configured to generate an estimate state of a bounding box and a confidence level of the estimated state of the bounding box based on the radar detections and the centroid information; and performing driver assistance operations based on the estimated state of the bounding box and the confidence level.

In other features, the sparse radar detection distribution includes only peak radar detections. The multiple modules are configured to generate the estimated state of the bounding box and the confidence level based on the peak radar detections.

In other features, the driver assistance method further includes, via the multiple modules: generating hidden features based on the object track; and estimating a position and a velocity of a centrode of the bounding box, where the estimated state of the bounding box includes the estimated position and the estimated velocity.

In other features, the driver assistance method further includes: concatenating via a first concatenator inputs including the hidden features; receiving via fully connected layers and a rectified linear unit an output of the first concatenator; receiving via a fully connected layer an output of the fully connected layers and the rectified linear unit; and summing an absolute position of a centroid of the object track to an output of the fully connected layer to provide the estimated position of the bounding box.

In other features, the driver assistance method further includes: subtracting the absolute position of the object track centroid from absolute positions of the radar detections to generate relative positions; accumulating the relative positions; and based on the accumulated relative positions, extracting via a feature backbone module recurrent feature information of the detected object to generate features. The inputs include the features output by the feature backbone module.

In other features, the driver assistance method further includes, via multiple regression heads, estimating parameters of the bounding box based on the features output by the feature backbone module. The confidence level is generated based on at least one of i) the features, and ii) the parameters.

Further areas of applicability of the present disclosure will become apparent from the detailed description, the claims and the drawings. The detailed description and specific examples are intended for purposes of illustration only and are not intended to limit the scope of the disclosure.

## BRIEF DESCRIPTION OF THE DRAWINGS

The present disclosure will become more fully understood from the detailed description and the accompanying drawings, wherein:

FIG. 1 is a top view of an example field-of-view of a radar sensor illustrating radar detection points and generated bounding boxes (bboxes) for certain objects;

FIG. 2 is a functional block diagram of a vehicle including an example ADAS and radar perception system with a hybrid object tracking module in accordance with the present disclosure;

FIG. 3 is a functional block diagram of the radar perception system including a driver assistance module and a hybrid object tracking module in accordance with the present disclosure;

FIG. 4 is a functional block diagram of a hybrid neural network-based object detection system of the hybrid object tracking module of FIG. 3 in accordance with the present disclosure;

FIG. 5 is functional block diagram of a feature backbone module and an object regression head module of the hybrid object tracking module of FIG. 3 and in accordance with the present disclosure; and

FIG. 6 illustrates a method of operating a hybrid neural network-based object detection system in accordance with the present disclosure.

In the drawings, reference numbers may be reused to identify similar and/or identical elements.

DETAILED DESCRIPTION

Radar sensors, cameras, LiDAR sensors, and ultrasonic sensors are four types of sensors that are commonly used in ADASs to detect objects external to a host vehicle. Radar and LiDAR sensors have longer detection ranges and more accurate range measurements than cameras. Cameras, however, are usually better than radar and LiDAR sensors for classifying objects. However, radar sensors operate better than cameras in poor visibility situations such as when it is a foggy day or dark (e.g., at night). LiDAR sensors are typically more expensive than radar sensors and cameras, and experience diminishing performance in poor road conditions such as when it is raining. A radar sensor usually works better than a LiDAR sensor in poor road conditions. Ultrasonic sensors have a much shorter detection range than radar sensors, cameras and LiDAR sensors. For this reason, ultrasonic sensors are only used in special scenarios such as in a parking lot.

For at least the above-stated reasons, radar sensors of a radar perception system are the sensors often included and used in an ADAS. An ADAS may be a partially or fully autonomous driving system. In comparison with a LiDAR sensor, however, a radar sensor has a much sparser detection (point) distribution. A radar sensor may be used for detecting only peak detection points for an object. This is unlike a LiDAR sensor and/or a camera, which each have numerous detection points for each detected object. As an example, a LiDAR sensor may provide 500 detection points for energy reflected off a single object. A radar sensor may have, for example, only 2-5 detection points for a single detected object. A medium-resolution radar may output no more than 200 detections (referred to as object point detections) every 50 milliseconds (ms) to cover an entire field of view (FOV) of the radar sensor. For example, a radar sensor can cover no more than 150-degree FOV and can reach 80-200 meters (m) from the sensor.

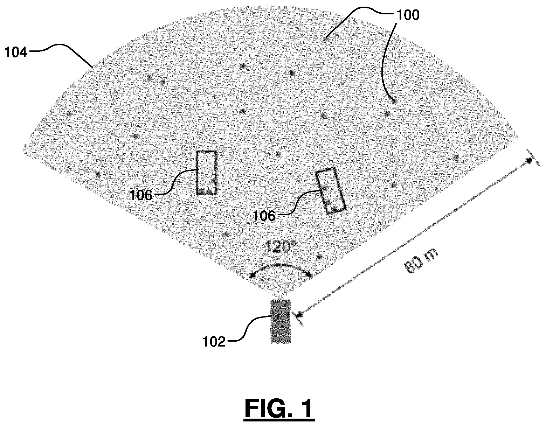

As is shown in FIG. 1, radar detection points 100 detected by a radar sensor 102 are distributed over a FOV 104 of the radar sensor 102. Bounding boxes (bboxes) 106 may be generated based on groups of the radar detection points 100. As an example, a regular (or average) size sedan at a distance of 40 m from an object may only have three radar detections during each scan in medium traffic, where each scan is 50 ms in duration. In the example shown, two bboxes are generated for two vehicles. A medium-resolution LiDAR sensor can however provide more than 100,000 detection points during each 100 ms scan. The detection points can cover an area 360 degrees around the corresponding host vehicle and can reach more than 200 m from the host vehicle. In the example shown, the radar sensor is implemented in a front bumper of a host vehicle but may be implemented elsewhere in the host vehicle. A radar sensor has thus a sparser detection distribution than a LiDAR sensor but each radar detection provides richer measurement information (more usable information such as range rate) than LiDAR sensor measurement information.

The output response of an automotive radar sensor that is provided to a controller is referred to as a radar detection (or radar detection signal). Each radar detection contains position and velocity information including range, azimuth angle, and range rate of a point of a detected object. A radar signal is emitted from a radar sensor and is reflected off an object and back to the sensor. The reflected radar energy (or reflected radar signal) is processed by a controller (or vehicle control module) using radar evaluating algorithms. This may include performing signal processing including performing a fast Fourier transform (FFT) and determining an azimuth angle that the radar signal energy reflects from, distance of the reflection from host vehicle, and range rate. The resultant output of this processing is referred to as processed radar detections. A radar object tracker may then receive the processed radar detections as inputs and generate tracks (or determine trajectories) of multiple target objects on the road such as cars, bicycles, and pedestrians.

There are associated challenges in designing a radar perception system. These challenges include a) how to measure or estimate a position, velocity, yaw angle, and size of an extended object such as a car or bicycle, b) how to identify a class of an object (e.g., a car, truck, or bicycle), and c) how to predict a confidence level of estimated states and other properties of the detected object. With the aforementioned characteristics of a radar sensor, these challenges can be difficult to address.

A sparse radar-detection distribution of a radar sensor makes it difficult for an object tracker to perceive a whole body of an extended object and corresponding parameters such as size, shape, position, and yaw angle of the object. An object tracker is a module of a radar perception system of a host vehicle that receives outputs of radar sensors and detects and tracks objects of interest, which may be on a road of the host vehicle. Tracking information for an object can include: an object identification (ID) number; a center or reference point position of the object (referred to as the centroid); velocity; acceleration; yaw angle; heading angle; size; and object class. A LiDAR sensor can provide many detection points (e.g., more than 500 points) associated with energy reflected from a single object. A human, without aid of a processor, can roughly determine the position, size, and orientation (yaw angle) of the object if provided with that many points. However, it is more difficult to obtain such information from a sparse radar-detection distribution. As is shown in FIG. 1, it is difficult to determine the size, orientation and position of a car (represented by a black rectangular bbox) from only three radar detections (three dots).

A sparse radar-detection distribution, which has a minimal number of radar detections per object, is one of the reasons why it is difficult to classify an object detected using a radar system that, for example, only looks at peak detections. Since it is difficult to determine the shape and size of the object, it is also difficult to determine the classification. In addition, commonly used radar sensors do not provide accurate height information of an object. Although a 4-D imaging (high-resolution) radar sensor may provide height information (elevation angle of each radar detection), current generation radar imaging systems do not have sufficient discrimination in height for object classification. Also, imaging radar systems are more expensive than traditional non-imaging radar systems. Traditional radar systems either do not have height information or do not have sufficiently accurate height information to allow for discrimination in heights of different parts of an object. In other words, current radar systems including traditional non-imaging radar systems and current generation imaging radar systems) only provide good 2-D plane ("bird's-eye-view") information such as range, azimuth angle, and range rate. The lack of object height makes it even harder for a conventional object tracker to determine object class based on a 2-D bbox.

Uncertainty (variance) of each radar detection may be provided by a radar sensor. However, a linear combination of the variance of all detections of the radar sensor that are associated with an object are not equivalent to the variance of the object. Detections reflect from different parts of the object. Different parts of the object may have different measurement variance from a radar sensor. Furthermore, a conventional object tracker may process radar detections and estimate object states using nonlinear methods that make it difficult to calculate the variance of estimated object states.

A rectangle that has a set of properties such as length, width, yaw angle, and center or reference point position, is defined as a bounding box (bbox) in a traditional 2-D object tracking system. The bbox is a representation model of the detected object. Such a representation model reduces computational cost and saves memory by constructing only a roughly rectangular object rather than a more detailed representation of the object. The object may have small parts that are not rectangular, but the discrepancy is negligible for an ADAS. In fact, most road objects (e.g., a car, a truck, a bicycle, etc.) can be represented in such a way without losing critical information such as corners of a car, front and rear bumpers, etc.

The examples set forth herein include a hybrid object tracking module (also referred to as a hybrid object tracker) that implements a hybrid neural network-based (HNN-based) object detection system. The HNN-based object detection system implements multiple neural networks and other operational modules to estimate bboxes of detected objects based on sparse radar sensor detections and corresponding such as centroid information. The estimated bboxes and corresponding determined information is used by an ADAS for driving assistance purposes, as further described below. By using sparse radar detections to estimate bboxes, the required amount of processing power and system memory is minimized and speed of processing is maximized.

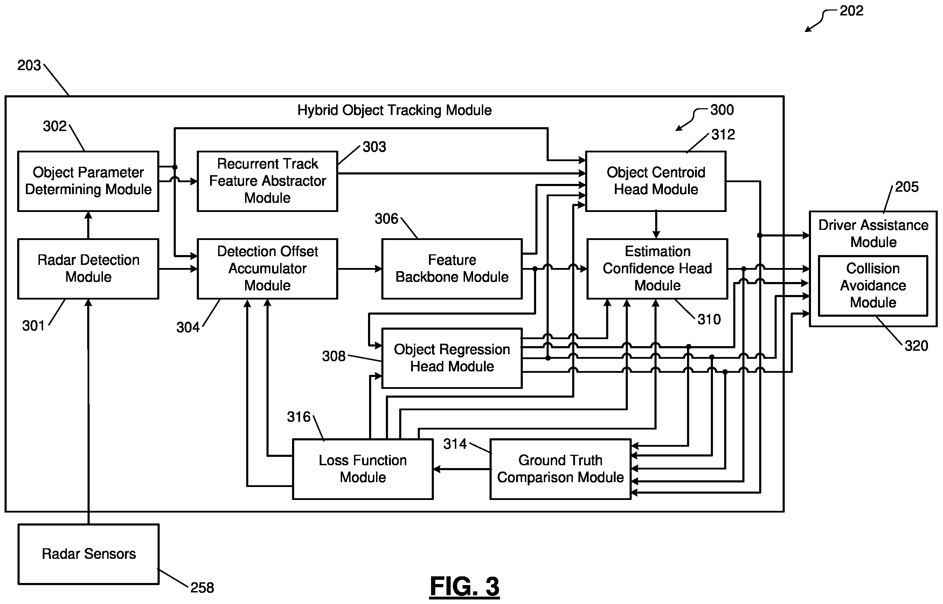

The HNN-based object detection system is implemented as a deep neural network model that is used to estimate a 2-D (two-Dimensional) bboxes of objects based on sparse radar-detection distributions from each of one or more radar sensors. The deep neural network model includes a recurrent track feature abstractor module, a detection offset accumulator module, a recurrent object feature backbone module, an object regression heads module, an estimation confidence head module, and an object centroid head module, which are described further below with respect to FIGs. 3-6. The deep neural network model and stated modules are extendable for different applications. In an embodiment, radar sensors are included that output height information of detected objects. In this embodiment, the deep neural network model is extended to output 3-D bboxes of objects.

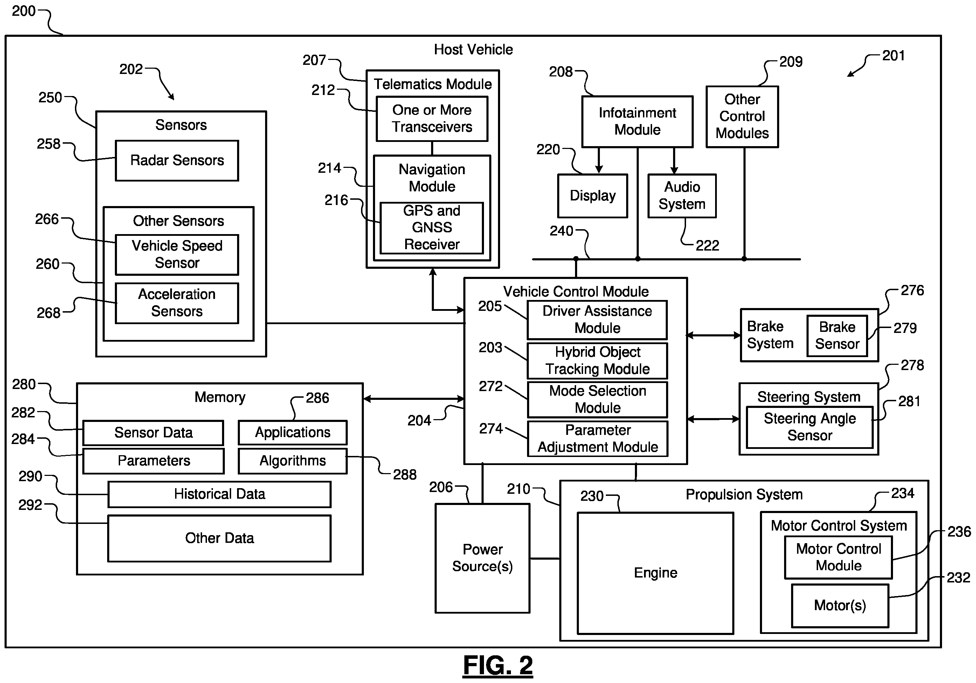

FIG. 2 shows a host vehicle 200 including an example ADAS 201 and radar perception system 202 with a hybrid object tracking module 203. The hybrid object tracking module 203 estimates bboxes (e.g., 2-D or 3-D bboxes) of detected objects as further described below. The ADAS 201 assists driving the host vehicle 200 based on the estimated bboxes as corresponding information. The host vehicle 200 includes a vehicle control module 204, which as shown includes the hybrid object tracking module 203 and a driver assistance module 205. The hybrid object tracking module 203 and/or the driver assistance module 205 perform: perception (or situation) determining operations; object detection, identification and classification; data look-up, collection, and gathering operations; dialog operations including providing speech and/or text; etc. The vehicle control module 204 may perform various operations based on the interaction with the user and the messages, generated as further described below.

The host vehicle 200 further includes one or more power sources 206, a telematics module 207, an infotainment module 208, other control modules 209 and a propulsion system 210. The vehicle control module 204 may control operation of the host vehicle 200 including the propulsion system 210. The power sources 206 may include one or more battery packs, a generator, a converter, a control circuit, terminals for high and low voltage loads, etc.

The telematics module 207 provides wireless communication services within the host vehicle 200 and wirelessly communicates with service providers, network devices, other vehicles, mobile devices, infrastructure devices, and other devices external and/or internal to the host vehicle 200. The telematics module 207 may support Wi-Fi®, Bluetooth®, Bluetooth Low Energy (BLE), near-field communication (NFC), cellular, legacy (LG) transmission control protocol (TCP), long-term evolution (LTE), and/or other wireless communication and/or operate according to Wi-Fi®, Bluetooth®, BLE, NFC, cellular, and/or other wireless communication protocols. The telematics module 207 may include one or more transceivers 212 and a navigation module 214 with a global positioning system (GPS) and GNSS (or Global Navigation Satellite System) receiver 216. The transceivers 212 wirelessly communicate with network devices internal and external to the host vehicle 200 including cloud-based network devices, central stations, back offices, and portable network devices.

The navigation module 214 executes a navigation application to provide navigation services. The navigation services may include location identification services to identify where the host vehicle 200 is located. The navigation services may also include guiding a driver and/or directing the host vehicle 200 to a selected location. The navigation module 214 may communicate with a central station to collect map information indicating levels of traffic, transportation object identification and locations (e.g., locations and types of signs), path information, where rest areas are located, where gas stations are located, where restaurants are located, etc. As an example, if the host vehicle 200 is an autonomous vehicle, the navigation module 214 may direct the vehicle control module 204 along a selected route to a selected destination. The GPS and GNSS receiver 216 may provide vehicle velocity and/or direction (or heading) of the host vehicle 200 and other vehicles and objects (e.g., pedestrians and cyclists) and/or global clock timing information.

The infotainment module 208 may include and/or be connected to an audio system 222 and/or a video system including one or more displays (one display 220 is shown). The display 220 and audio system 222 may be part of a human machine interface. The displays may include cluster and/or center console displays, head-up displays, etc. Messages may be displayed, audibly played out, and/or indicated via the display 220, the audio system 222, and/or via one or more other output devices.

The infotainment module 208 may provide various informative, warning, and proactive messages including information regarding vehicle status information, object detection information, driving directions and/or instructions, autonomous driving status information, diagnostic information, entertainment features, etc. The infotainment module 208 may be used to guide a vehicle operator to a certain location and other information.

The propulsion system 210 may include one or more torque sources, such as one or more motors and/or one or more engines (e.g., internal combustion engines). In the example shown in FIG. 2, the host vehicle 200 includes an engine 230 and one or more motors 232. The torque sources are independently controlled. The propulsion system 210 includes a motor control system 234 that includes the one or more motors 232 and a motor control module 236 that may control operation of the one or more motors 232 based on signals from the vehicle control module 204.

The modules 203, 204, 205, 208, 209 may communicate with each other via one or more buses 240, such as a controller area network (CAN) bus and/or other suitable interface. The vehicle control module 204 may control operation of vehicle modules, devices and systems based on feedback from sensors 250.

The sensors 250 may radar sensors 258 and other sensors 260. The radar sensors 258 may be used to detect objects external to the host vehicle 200 and/or in a path of the host vehicle 200. The radar sensors 258 may be discrete digital devices and include non-imaging radar sensors and imaging radar sensors. The radar sensors 258 may include 2-D, 3-D and/or 4-D sensors. The other sensors 260 may include a vehicle speed sensor 266 and acceleration sensors (e.g., longitudinal and lateral acceleration sensors) 268. Additional sensors may also be included such as brake system sensors (a brake sensor 279 is shown) and steering system sensors (a steering angle sensor 281 is shown).

The vehicle control module 204 may also include a mode selection module 272 and a parameter adjustment module 274. The mode selection module 272 may select a vehicle operating mode. The parameter adjustment module 274 may be used to adjust parameters of the host vehicle 200. The vehicle control module 204 may perform autonomous operations based on interaction with a vehicle occupant. As an example, the vehicle control module 204 may operate in a fully or partially autonomous mode and may control the propulsion system 210, a brake system 276, and a steering system 278. In an embodiment, the vehicle control module 204 controls operation of the systems 210, 276 and 278 based on interactions with a vehicle occupant. The vehicle control module 204 may i) perform autonomous operations such as steering, braking, accelerating, etc., and/or ii) display and/or audibly playout messages, and/or output messages and/or corresponding signals via other output devices.

The host vehicle 20 may further include the memory 280. The memory 280 may store sensor data 282 such as radar detection data, parameters 284, applications 286, algorithms 288, historical data 290, and other data 292. The parameters may include: sensor parameters; parameters generated by any of the modules 203, 204, 205; and/or other data, parameters and/or variables as referred to herein. The applications 286 may include applications executed by the modules 203, 204, 205, 207, 208, 209.

Although the memory 280 and the vehicle control module 204 are shown as separate devices, the memory 280 and the vehicle control module 204 may be implemented as a single device. The memory 280 may also store historical data 290 and other data 292 such as driver driving patterns, object moving patterns, data collected by and/or generated by at least one of the modules 204, 205, traffic data, navigation data, map data, GPS data, path data, speed data, and acceleration data, etc.

The vehicle control module 204 may control operation of the propulsion system 210, the video system including the display 220, the audio system 222, the brake system 276, the steering system 278, and/or other devices and systems according to parameters set by the modules 203, 204, 205, 208, 209, 274. The vehicle control module 204 may set at least some of the parameters based on signals received from the sensors 250.

The vehicle control module 204 may receive power from the power sources 206, which may be provided to the propulsion system 210, the brake system 276, the steering system 278, etc. Power supplied to the motors 232, the brake system 276, the steering system 278, and/or actuators thereof may be controlled by the vehicle control module 204 to, for example, adjust: motor speed, torque, and/or acceleration; braking pressure; steering wheel angle; pedal position; etc. This control may be based on the outputs of the sensors 250, the navigation module 214, the GPS and GNSS receiver 216, the data and information received from external devices, and the data and information stored in the memory 280. The vehicle control module 204 may determine various parameters including a vehicle speed, a motor speed, a gear state, an accelerator position, a brake pedal position, and/or other information.

The host vehicle 200 can include various systems for assisting a driver, for performing autonomous operations, and/or for indicating to a vehicle occupant information regarding an environment of the host vehicle. For example, a host system may include a navigation system that provides map information indicating lane boundaries, street locations, speed limits, geographical locations of selected destinations, etc. The host system may provide the driver with instructions for driving to a selected destination and/or may perform autonomous operations such as braking, steering and accelerating operations to drive the vehicle to the destination based on the map information, bbox estimations, and other object detection information.

As another example, the host vehicle 200 may detect impending objects and perform countermeasures and/or take evasive actions to prevent a collision. The vehicle control module 204 determines locations of the objects relative to the host vehicle 200 and trajectories of the objects and the host vehicle 200. If it is determined that the host vehicle 200 is likely to collide with one of the objects, one or more warning signals may be generated to indicate to the driver and/or the object of concern of the potential collision. The vehicle control module 204 may also or alternatively perform one or more other countermeasures (e.g., apply brakes to decelerate the host vehicle, change a steering angle of the host vehicle, etc.) to prevent a collision.

FIG. 3 shows the radar perception system 202 including the hybrid object tracking module 203 and the driver assistance module 205. The hybrid object tracking module 203 includes a hybrid neural network-based object detection system 300, which includes: a radar detection module 301, object parameter determining module 302, a recurrent track feature abstractor module 303, a detection offset accumulator module 304, a recurrent object feature backbone module 306, an object regression head module 308, an estimation confidence head module 310 and an object centroid head module 312. The hybrid object tracking module 203 may further include for use during calibration and/or training procedures a ground truth comparison module 314 and a loss function module 316. Although the following modules are primarily described with respect to operations performed for a single detected object, the operations may be performed for each detected object.

The radar detection module 301 collects radar detections from the radar sensors 258. This may include the number of detections N, input features F of the radar detections, and time sequence length T. The features F may include X and Y coordinate locations of the radar detection points (or peak energy detection points) of a radar distribution signal over time.

The object parameter determining module 302 may determine centroid information of the detected object based on the radar detections including position and velocity information. The centroid information includes a centroid of the object including a X and Y coordinate location of the center of the object and velocity information $V_X$ and $V_Y$ of the centroid. The parameters X, Y, $V_X$, $V_Y$ are in a vehicle coordinate system. The centroid information may also include an object trajectory, an object size, an object ID, etc.

The recurrent track feature abstractor module 303 abstracts recurrent hidden features based on inputs from radar sensors for a detected object. The inputs provided to the recurrent track feature abstractor module 303 may include tracked information provided in the form of "an object track", as further described below. Hidden features refer to features of detected objects determined via a neural network that are in a format only recognizable to a neural and/or machine learning network.

The detection offset accumulator module 304 accumulates relative positions of radar detections of the detected object. The relative positions are accumulated within a short period of time (e.g., 0.15 seconds) to have a denser detection distribution and to avoid a need for motion compensation for an object of unknown states. Motion compensation on an object of unknown states cannot be performed and thus is avoided.

The radar detections associated with an object track are fed into the detection offset accumulator module 304. Because of this, the deep neural network model does not need to handle the association between objects and radar detections for multiple-object tracks. Clustering or association of radar detections in a whole FOV is computationally expensive. The deep neural network model uses association information of object tracks to avoid this association problem, and thereby, is less expensive in computation. An incorrect association between an object and a radar detection can cause incorrect bbox estimation. The deep neural network model is resistant to many types of noise/uncertainty including incorrect associations.

The recurrent object feature backbone module 306 extracts and encodes recurrent feature information of an object based on a sparse radar-detection distribution and the accumulated output of the detection offset accumulator module 304.

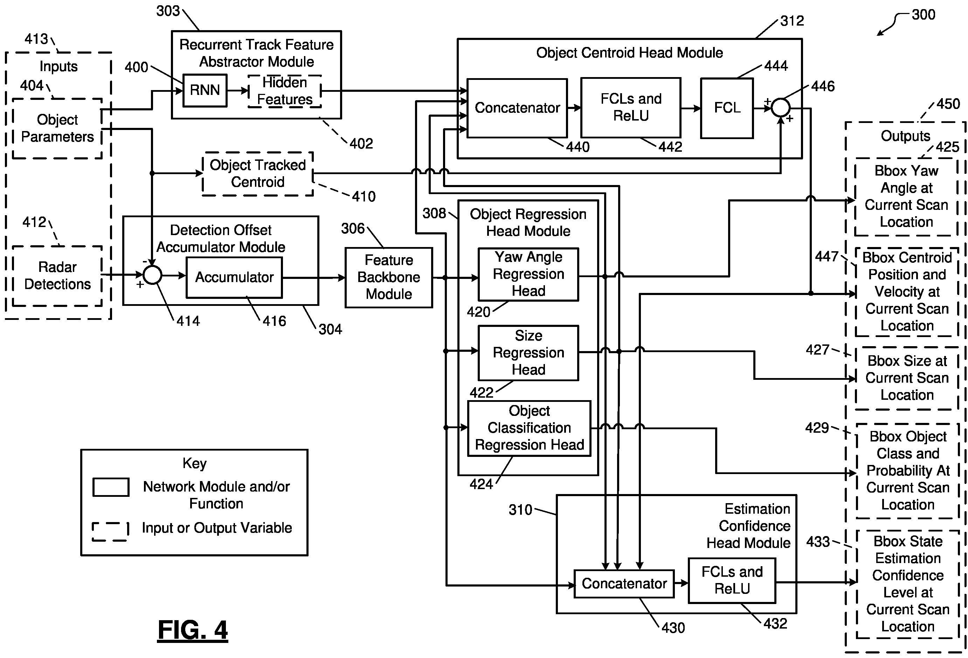

The object regression head module 308 includes independent regressors that estimate information of a detected object. The regressors are referred to as regression heads and generate bbox state information, such as yaw angle, size, and object classification states. Any number of regression heads may be implemented. Although the example of FIG. 4 shows three regression heads, others may be included. The regression heads may be used respectively to determine the yaw angle, size, classification, and/or other bbox state.

The estimation confidence head module 310 extracts estimation information such as position, size, yaw angle, etc. based on the features encoded by feature backbone module 306 and based on the bbox states estimated by the object regression heads of the object regression head module 308 and the object centroid head module 312 and predicts the confidence (the value ranges continuously from 0 to 1) of each estimated bbox state. The centroid information of a bbox is used by the estimation confidence head module 310 to predict the confidence of each estimated bbox state.

The object centroid head module 312 is configured to perform multiple operations including restoring the absolute position of the bbox by adding the position of bbox centroid that is relative to the object track centroid to the absolute position of the object track centroid.

The object centroid head module 312 also extracts bbox position and velocity information from the features encoded by the feature backbone module 306 and estimates position of the bbox centroid relative to the object track's centroid (object track centroid 410 of FIG. 4) that is output by object parameter determining module 302 and absolute velocity of the bbox. The tasks can be extended to estimate acceleration of the bbox.

The ground truth comparison module 314 compares outputs of the modules 310, 312 to ground truth values, which are known actual values. The comparisons are provided to the loss function module 316, which then adjusts operations of the modules 303, 304, 306, 308, 310, 312 based on the comparison results. The loss function module 316 may generate weight values, based on which the modules 303, 304, 306, 308, 310, 312 are adjusted.

The loss function module 316 implements a loss function $F_{loss,total}$ of the cost of mismatching neural network prediction with observation (or ground truth). The loss function module 316 indicates to a neural network (e.g., the deep neural network model) how well the neural network is modeling training data. The loss function $F_{loss,total}$ is designed as a sum of weighted average loss of centroid position, velocity, yaw angle, generalized intersection over union (GIOU), and object class. In an embodiment, the loss function $F_{loss,total}$ may be represented as equation 1, where $F_{loss}$ is the loss function, w is a loss weight, $w_{centroid\,pos}$ is a weight for centroid position, $F_{loss,centroid\,pos}$ is an error in the estimated centroid position, $w_{centroid\,vel}$ is a weight for centroid velocity, $F_{loss,centroid\,vel}$ is an error in the estimated velocity of the centroid, $w_{yaw}$ is a weight for yaw angle of the centroid, $F_{loss,yaw}$ is an error in the estimated centroid yaw angle, $w_{GIOU}$ is weight for GIOU, $F_{loss,GIOU}$ is an error in the estimated GIOU, $w_{obj\,class}$ is a weight for the class of the object, and $F_{loss,obj\,class}$ is an error in the estimated classification of the object.

$$F_{loss,total} = w_{centroid\,pos} \cdot F_{loss,centroid\,pos} + w_{centroid\,vel} \cdot F_{loss,centroid\,vel} + W_{yaw} \cdot F_{loss,yaw} + w_{GIOU} \cdot F_{loss,GIOU} + w_{obj\,class} \cdot F_{loss,obj\,class} \tag{1}$$

The loss weights are constant values, which may be determined using grid-search optimization including searching for possible combinations of loss weights that lead to a minimum total loss.

In an embodiment, a pseudo-Huber loss function as represented by equation 2 is used to determine each of the loss functions $F_{loss,centroid\,pos}$, $F_{loss,centroid\,vel}$, $F_{loss,yaw}$, $F_{loss,GIOU}$, and $F_{loss,obj\,class}$ of equation 1, where s is the slope of a straight line in Huber (not pseudo-Huber) loss function and $\varepsilon$ is a residual value (the difference between the observed and predicted values), respectively.

$$F_{loss} = s^2\left(\sqrt{1 + \left(\frac{\varepsilon}{s}\right)^2} - 1\right) \tag{2}$$

Note that different loss functions in equation 1 may have different values of $s$ and $\varepsilon$. In addition to GIOU and a standard residual for velocity, residuals are defined for the other bbox states of yaw angle, positions in VCS, length, and width to ensure efficiency and effectiveness in neural network training. The residual of yaw angle, $\varepsilon_{yaw}$ may be represented by equation 3, where $\theta$ is a yaw angle of the neural network predicted bbox and $\theta_g$ is the corresponding ground-truth yaw angle.

$$\varepsilon_{yaw} = \sin\left(\theta - \theta_g\right) \tag{3}$$

The residual of longitudinal position in the host VCS, $\varepsilon_x$ may be represented by equation 4, where $x$ is a longitudinal position of neural network predicted bbox and $x_g$ is a ground-truth position of the bbox in the host VCS.

$$\varepsilon_x = \frac{x - x_g}{d} \tag{4}$$

Similarly to $\varepsilon_x$, the residual of lateral position in the host VCS, $\varepsilon_y$ may be determined using equation 5, where $y$ is longitudinal position of neural network predicted bbox and $y_g$ is ground-truth position of bbox in the host VCS.

$$\varepsilon_y = \frac{y - y_g}{d} \tag{5}$$

In equations 4 and 5, d is the diagonal distance of the network predicted bbox, where *len* is length of the neural network predicted bbox and *wid* is width of the neural network predicted bbox.

$$d = \sqrt{(len^2 + wid^2)} \tag{6}$$

The residual of length $\varepsilon_{len}$ may be represented as equation 7, where *len* is length of neural network predicted bbox and $len_g$ is a ground-truth of the length of bbox.

$$\varepsilon_{len} = \ln\left(\frac{len}{len_g}\right) \tag{7}$$

The residual of width $\varepsilon_{wid}$ may be determined using equation 8, where *wid* is width of neural network predicted bbox and $wid_g$ is the ground-truth of the width of the bbox.

$$\varepsilon_{wid} = \ln\left(\frac{wid}{wid_g}\right) \tag{8}$$

where *wid* and $wid_g$ are widths of the network predicted bbox and corresponding ground-truth, respectively.

There are two benefits in using the pseudo-Huber loss function. On the one hand, this loss function is a combination of L1-norm and L2-norm loss functions, and thus, is more robust to outlier data points than the squared error loss. In order to acquire information of real-world driving scenarios and road users, LiDAR sensors may be used to collect data and a learning-based ground-truth labeler and tracker may be used to label and track road users and environments. However, ground truth data may not be 100% correct, which is common in ground truth data generation. If there are many outliers (i.e., incorrect data points), a neural network may fail to learn the dataset. For example, the training loss may not converge or fail to get an optimal model due to the outliers. On the other hand, the above-described loss function $F_{loss,total}$ ensures continuity in a derivative operation and strong convexity when it approaches minimum or extreme values in loss minimization. Both characteristics make the optimization process easy and robust.

In addition, a penalty function may be implemented and represented by equation 9, where $R_{L2}$ is a L2-form regularization function, $\lambda$ is a regularization parameter, $w_i$ is the ith parameter (or weight) of the neural network, and $N$ is a total number of parameters of the neural network.

$$R_{L2}(\lambda) = \lambda \sum_{i=1}^{N} w_i^2 \tag{9}$$

The loss function and regularization function are combined to provide a final cost-minimization function, which may be represented by equation 10, where *k* is the *k*th iteration of network training. The regularization weight $\lambda$ may decay with iterations during neural network training, implying that $R_{k,L2}$ may change with iterations.

$$\min\Phi_k(\mathbf{x}) = F_{k,loss,total} + R_{k,L2} \qquad (10)$$

The driver assistance module 205 may include a collision avoidance module 320. The collision avoidance module 320 may perform operations to avoid a collision as described herein based on the estimated bbox information output from the modules 308, 310, 312. Examples of the outputs received from modules 308, 310, 312 are shown in FIG. 4.

The hybrid object tracking module 203 and/or the driver assistance module 205 may use machine learning for object classification including to identify and/or classify pedestrians, cyclists, and vehicles (e.g., oncoming traffic), as well as for probable trajectory determination of each detected, identified and/or classified object. The hybrid object tracking module 203 may determine the locations of objects based on feedback from the sensors 250.

The stated deep neural network module generates and estimates a bbox of an object based on sparse radar-detection distribution. The deep neural network module has an adaptive network architecture that is easily integrated into a conventional object tracker as an add-on module and can be extended for different needs without changing a software interface. For example, more regression heads may be added to generate more properties of the bbox and/or abstracted features may be concatenated and the outputs of various combinations of the modules 306, 308, 420, 422, 424 to generate new properties of the bbox.

FIG. 4 shows the hybrid neural network-based object detection system 300 of FIG. 3 and associated inputs and outputs. In FIG. 4, solid-line boxes refer to network modules and/or functions and dashed-line boxes refer to input and output data, parameters, and/or variables. The hybrid neural network-based object detection system 300 is a deep neural network model that includes multiple neural networks.

The hybrid neural network-based object detection system 300 includes the recurrent track feature abstractor module 303, the detection offset accumulator module 304, the recurrent object feature backbone module 306, the object regression head module 308, the estimation confidence head module 310 and the object centroid head module 312.

The recurrent track feature abstractor module 303 includes a recurrent neural network (RNN) 400 that abstracts recurrent hidden features 402 (e.g., 100 hidden features) based on tracking information (or track) of a detected object. The RNN 400 is implemented in the form of a few RNN layers and receives object parameter inputs 404, which may be generated by the object parameter determining module 302 of FIG. 3. The received object parameter inputs 404 may include: position and velocity parameters such as the parameters X, Y, $V_X$, $V_Y$ of a centroid of a detected object; an object trajectory; an object size; an object ID; and/or an object track; etc. The hidden features 402 are provided to the object centroid head module 312, which obtains position and velocity of the centroid of an object. In an embodiment, the RNN 400 receives object track centroid information such as position and velocity as its input but may also receive more object track information if extra hidden features are of interest. The hidden features 402 may include any number of features including features corresponding to double bounce detections of radar energy.

The detection offset accumulator module 304 subtracts the absolute position of a centroid of an object track (referred to as the object tracked centroid 410 in FIG. 4) from absolute positions of radar detections and accumulates offsets (relative positions) of those detections with respect to the object centroid. The distance that an object has moved has been compensated for when the object centroid position is subtracted from the positions of the radar detections. The detection offset accumulator module 304 receives object parameter inputs 404 and radar detection inputs 412, collectively inputs 413. The inputs 413 of the deep neural network model include object track centroid information and radar detections (of sparse distribution) that are associated with an object track. The radar detections may be provided as a tensor. The object parameter inputs 404 may include the position of the object, which may be provided twice per time sequence length (or 2 * T). The radar detections may include the number of detections N (e.g., 64), input features F, and time sequence length T (T is an integer number and represents the number of time intervals. Time sequence means a sequential period of time. This period of time is quantified by T for a digital/discrete system. e.g., if the sequential period of time is 200 milliseconds and a time interval between two consecutive radar scans is 50 millisecond, then there are 4 time intervals (i.e., T is equal to 4) of each radar detection.

The detection offset accumulator module 304 includes a summer 414 and an accumulator 416. The summer 414 subtracts an absolute position of the centroid, which was received as an input from radar detections to reduce values processed. In an embodiment, the summer 414 subtracts an absolute position of the centroid from absolute position of each radar detection. The absolute position of the object track centroid is determined and output by object parameter determining module 302. N * F * T means the dimensions of the tensor of each radar detection. The 3-D tensor of each radar detection contains N * F * T elements. The summer 414 subtracts absolute position of the object track centroid from absolute position of a radar detection. And the summer does this subtraction to all its input radar detections one by one. Then the position of each input radar detection becomes a relative position (relative to the object track centroid).

The dimension M refers to a number (or dimension) of parameters provided as inputs. As an example, the dimension M may be four when parameters X, Y, $V_X$, $V_Y$ are provided. M * T means the dimensions of the tensor of each object track centroid. It does not mean that the position of object track centroid is determined based on the product, M * T.

The accumulator 416 accumulates the outputs of the summer 414 for multiple radar detections associated with the same detected object to provide an accumulated output. The accumulator 416 may be referred to as a detection offset accumulator as the accumulator 416 accumulates and stores the offsets in buffer (e.g., an array in the memory 280 of FIG. 2) between the absolute centroid position and absolute positions of the radar detections and updates the stored offsets in a first-in-first-out way. The detection offset accumulator removes the oldest offsets in buffer and adds most recent offsets in a first-in-first-out manner.

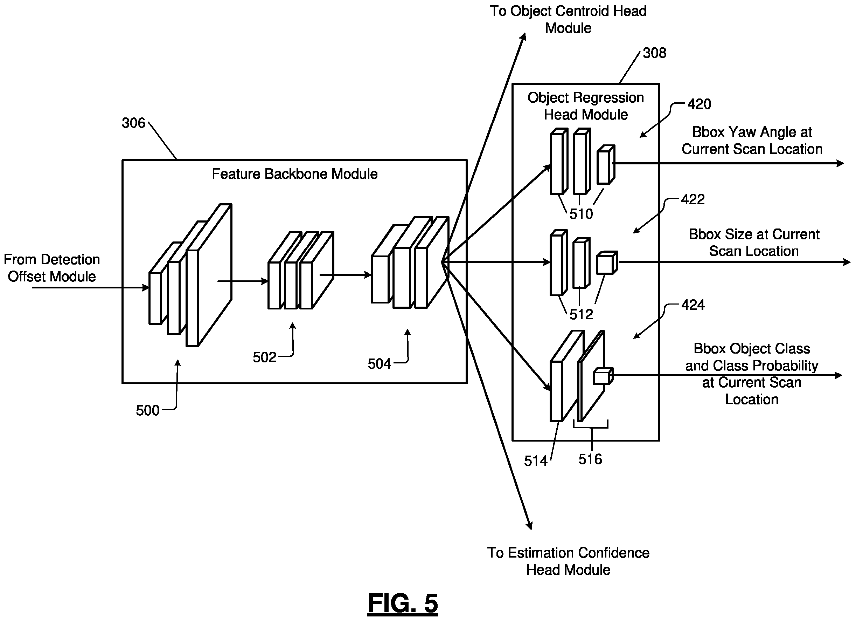

The recurrent object feature backbone module 306 includes a neural network that generates features that are to be provided to regression heads (also referred to as regression head modules) of the object regression head module 308. The features may be hidden features different than generated by the RNN 400. Any number of features may be generated as a second tensor, which may be provided to each of the regression heads of the object regression head module 308. The same features may be received by each of the regression heads. The structure of the feature backbone module 306 is shown in FIG. 5.

The object regression head module 308 includes the yaw angle regression head 420, the size regression head 422, and the object classification regression head 424. The yaw angle regression head 420 extracts bbox orientation information from the features encoded by feature backbone module 306 and estimates yaw angle of the bbox at current scan location 425. The structure of the yaw angle regression head 420 is shown in FIG. 5. The size regression head 422 extracts bbox size information from the features encoded by feature backbone module 306 and estimates bbox size (length and width) for a current scan location, represented as output 427.

The object classification regression head 424 extracts object class information from the features encoded by the feature backbone module 306 and estimates i) classification of the object for the current scan location, and ii) a probability that the object has the estimated object classification. The object classification indicates whether the detected object is a vehicle, a person, a bike, or other type of object. This is represented as output 429. The object classification regression head 424 is composed of a few fully connected layers (FCLs) and a support sector machine (SVM) layer. As used herein the term "fully connected layer" refers to a neural network in which each neuron applies a linear transformation to the input vector through a weights matrix. As a result, all possible connections layer-to-layer are present, meaning every input of the input vector influences every output of the output vector. As used herein, a support vector machine refers to a support vector networks that is a supervised max-margin model with one or more associated learning algorithms that analyze data for classification and regression analysis. Output of the object classification regression head 424 is an object class such as car, truck, bicycle, etc., and also the probability of each object class.

The estimation confidence head module 310 includes a concatenator 430 and FCLs and rectified linear unit (ReLU) 432. As used herein the term "rectified linear unit refers to a piecewise linear function that will output the input directly if it is positive, otherwise, it will output zero. A rectified linear unit is an activation function defined as the positive part of its argument and may be represented by equation 11, where x is an input to a neuron.

$$f(x) = x^+ = \max(0, x) = \frac{x + |x|}{2} = \begin{cases} x & if\ x > 0 \\ 0 & otherwise \end{cases} \qquad (11)$$

In an embodiment, the estimation confidence head module 310 includes three or more fully connected layers (FCLs). The estimation confidence head module 310 may be extended by concatenating more object (or bbox) state information than the yaw angle and size. The additional bbox state information may include the object class. The concatenator 430 concatenates at least the outputs of the feature backbone module 306, the object centroid head module 312, and the regression heads 420. 422. The FCLs and ReLU 432 generate a bbox state estimation confidence level for a current scan location, which is provided as output 433.

The object centroid head module 312 includes a concatenator 440, RCLs and ReLU 442, and a FCL 444, and a summer 446. The concatenator 440 concatenates outputs of the modules 303, 306, 420, 422 including the hidden features, the features generated by the feature backbone module, the yaw angle of the bbox and the size of the bbox. The FCLs and ReLU receive the concatenated output of the concatenator 440 to generate features, which are provided to the FCL 444. The FCL 444 outputs a position and velocity of the bbox for the current scan location. The position is summed with the absolute position of the centroid to provide the position of the centroid at current scan location. The resultant position of the centroid and velocity are represented as output 447.

The summer 446 receives the object tracked centroid 410 (or absolute position of the centroid) and adds the absolute position to the position of the bbox centroid output from the FCL 444, which is a position relevant to the object track centroid. The position of bbox centroid that is output by FCL 444 is a position relative to the object track centroid 410. For this reason, the relative position is added back to the absolute position of the object track centroid 410 to get the absolute position of the bbox centroid. The absolute position of the object track centroid was subtracted earlier from the absolute position of each detection when the network receives input detections (refer to summer 414).

The absolute position of the object track centroid was subtracted earlier from the absolute position of each radar detection by the summer 414. The feature backbone module 306, the yaw angle regression head 420, and the size regression head 422 use relative positions (positions of detections relative to the object track centroid). It is difficult for a neural network to learn absolute position, whereas a neural network can more easily and robustly learn relative position (or position offset).

The outputs 425, 427, 429, 433, 447 (collectively outputs 450) of the deep neural network model include yaw angle, centroid position and velocity, size (length and width), object class and class probability, and confidence of estimated state information of the bbox of an object. These outputs may be provided to the driver assistance module 205 of FIG. 3.

FIG. 5 shows the feature backbone module 306 (also referred to as a recurrent object feature backbone module) and the object regression head module 308 of the hybrid object tracking module of FIG. 3. The feature backbone module 306 includes multilayer perceptron (MLP) layers 500, pooling layers 502, and a RNN 504. As used herein, the term "multilayer perceptron" refers to a feedforward artificial neural network, consisting of fully connected neurons with a nonlinear kind of activation function, organized in at least three layers. A multilayer perceptron has input and output layers, and one or more hidden layers with many neurons stacked together. While in a perceptron the neuron must have an activation function that imposes a threshold, like ReLU or sigmoid, neurons in a multilayer perceptron can use any arbitrary activation function.

The RNN 504 may include a long short-term memory (LSTM) or gated recurrent units (GRUs). To overcome the problem that sparse detection distribution does not contain much information of an extended object, RNN recurrent layers are added to store prior feature information and enhance feature abstraction at current scan (also known as radar scan or current time interval). To clarify, the feature backbone module 306 is designed to i) store prior scans of features and current features sequentially, and ii) abstract the sequentially sorted features. In so doing the deep neural network module is resilient to missing scans of data or poor-quality features. If we did not use this approach, the estimated bbox (or deep neural network module output) would experience a size and position jump. Various RNN models may be implemented. The LSTM-based RNN model is slightly more accurate in bbox estimation but has higher throughput than the GRU-based RNN model. The deep neural network module generates accurate bbox estimates for object tracking.

Each of the regression heads 420, 422 of FIG. 4 includes two or more layers of FCLs and ReLUs. In FIG. 5, three pillars (or layers) 510 are shown for regression head 420 and three pillars (or layers) 512 are shown for regression head 422, where each of the pillars 510, 512 represents a combination of a FCL and multiple ReLUs. Each layer consists of a FCL followed by ReLUs. Although three pillars are shown, less or more pillars (or layers) may be included in the regression heads 420, 422. The object classification regression head 424 includes one or more FCLs 514 followed by a SVM 516.

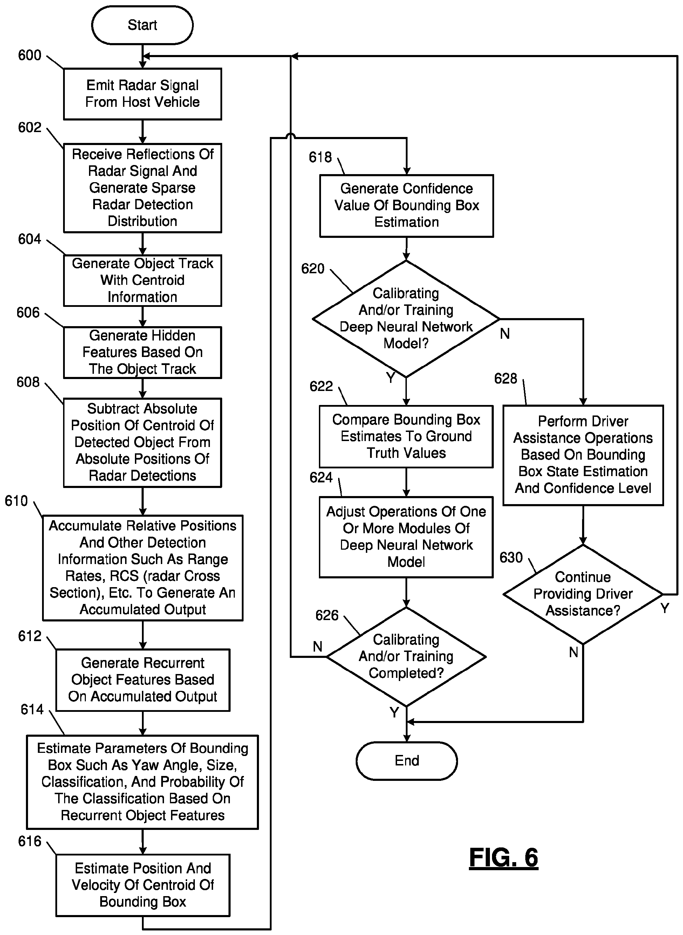

FIG. 6 shows a method of operating a hybrid neural network-based object detection system, such as that shown in FIG. 4. Although the following operations are described below with respect to a single radar signal from a single radar sensor and the detection of a single object, the operations may be modified and/or repeated for additional radar signals, radar sensors, and detected objects. The following operations are described primarily with respect to the hybrid object tracking module 203 and driver assistance module 205 of FIGs. 2-4.

At 600, a radar sensor emits a radar signal from a host vehicle. At 602, the radar sensor receives reflections of the radar signal, which are reflected off of at least one detected object and may be reflected off one or more other objects. The radar sensor and/or the radar detection module 301 may then generate radar detections and a corresponding sparse radar detection distribution of the radar detections.

At 604, the object parameter determining module 302 generates an object track with centroid information based on the radar detections. The centroid information may include the position and velocity of the centroid, as well as other information such as object ID, size, etc.

At 606, the RNN 400 of the recurrent track feature abstractor module 303 generates hidden features based on object track. At 608, the summer 414 of the detection offset accumulator module 304 subtracts an absolute position of the centroid of the detected object from absolute positions of radar detections to generate relative positions.

At 610, the accumulator 416 of the detection offset accumulator module 304 accumulates the relative positions and other detection information such as range rates, RCS (radar cross section), etc. to generate an accumulated output. Relative positions of the radar detections and other detection information are accumulated for last few scans during a length of a predetermined time sequence period T. How much information of a detection is accumulated can be extended for various applications and performance requirements.

At 612, the feature backbone module 306 generates recurrent object features based on the accumulated output. At 614, the regression heads 420, 422, 424 estimate yaw angle, size, classification of object, and probability of the classification for the current scan location based on the recurrent object features. Other regression heads may further generate one or more other parameters based on the recurrent object features. The parameters may be provided to the driver assistance module 205 and the estimation confidence head module 310. In one embodiment, the yaw angle and size are provided to the estimation confidence head module 310 and the classification and probability of the classification are not provided to the estimation confidence head module 310.

At 616, the object centroid head module 312 estimates position of centroid for the current scan location based on at least the hidden features, recurrent object features, yaw angle, and size. This includes the summer 446 summing the absolute object track centroid position to the estimated position to provide resultant estimation of centroid position. The velocity may be estimated based on change in the resultant estimated position. The object centroid head module 312 may provide the resultant estimated position and velocity to the driver assistance module 205 and the estimation confidence head module 310.

At 618, the estimation confidence head module 310 estimates a confidence level of a bbox state estimation for the current scan location, which refers to the estimated yaw angle, position, velocity, and size of output from the modules 308, 312 and determined at 614, 616. The confidence level is generated based on outputs of the modules 306, 308, and 312 including outputs of modules 420, 422, 424. The confidence level may be, for example, a value between 0-1, where 0 is 0% (or a lowest confidence level) and 1 is 100% (or a highest confidence level). Probability of classification itself indicates the confidence level of classification.

At 620, the hybrid object tracking module 203 determines whether the deep neural network model is being calibrated and/or trained. If yes, operation 622 may be performed, otherwise operation 628 may be performed.

At 622, the ground truth comparison module 314 compares outputs of one or more of the modules 308, 310, 312 to corresponding ground truth values to generate error values. At 624, the loss function module 316 adjust operations of at least one of the modules 303, 304, 306, 308, 310, 312 based on the error values. The loss function module 316 may adjust weights of any of the modules 303, 304, 306, 308, 310, 312 to adjust operations thereof. This is done to minimize the errors and maximize accuracy. At 626, the hybrid object tracking module 203 determines whether calibration and/or training is completed. If no, operation 600 may be performed, otherwise the method may end.

At 628, the driver assistance module 205 performs driver assistance operations and/or driving operations based on the bbox state estimation and confidence level. This may include generating a message to instruct a driver to perform certain actions, assisting a driver in performing certain actions, and/or autonomously driving the host vehicle. When the confidence level is below a predetermined level (e.g., 70%), the bbox state estimation may be ignored and/or a message may be generated and provided to the driver of the vehicle to allow the driver to determine whether a suggested operation should be performed. The suggested operation may be indicated to the driver and the driver may then assess whether this is an appropriate action to take.

At 630, the hybrid object tracking module 203 may determine whether to continue providing driver assistance. If yes, operation 600 may be performed, otherwise the method may end.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements. As used herein, the phrase at least one of A, B, and C should be construed to mean a logical (A OR B OR C), using a non-exclusive logical OR, and should not be construed to mean "at least one of A, at least one of B, and at least one of C."

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Javascript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

## Claims

1. A driver assistance system comprising:

a hybrid object tracking module comprising

a radar detection module configured to receive a sparse radar detection distribution including radar detections based on a radar signal emitted from a host vehicle,
an object parameter determining module configured to generate an object track including centroid information for a detected object relative to the host vehicle, and
a plurality of modules implementing a deep neural network model and comprising a plurality of neural networks, the deep neural network model configured to generate an estimate state of a bounding box and a confidence level of the estimated state of the bounding box based on the radar detections and the centroid information; and

a driver assistance module configured to perform driver assistance operations based on the estimated state of the bounding box and the confidence level.

2. The driver assistance system of claim 1, wherein:

the sparse radar detection distribution includes only peak radar detections; and
the plurality of modules are configured to generate the estimated state of the bounding box and the confidence level based on the peak radar detections.

3. The driver assistance system of claim 1 or 2, wherein:

the plurality of modules comprise

a recurrent track feature abstractor module configured to generate hidden features based on the object track, and
an object centroid head module configured to estimate a position and a velocity of a centrode of the bounding box; and

the estimated state of the bounding box comprises the estimated position and the estimated velocity.

4. The driver assistance system of claim 3, wherein the object centroid head module comprises:

a first concatenator configured to receive and concatenate a plurality of inputs including the hidden features;
fully connected layers and a rectified linear unit configured to receive an output of the first concatenator;
a fully connected layer configured to receive an output of the fully connected layers and the rectified linear unit; and
a summer configured to add an absolute position of a centroid of the object track to an output of the fully connected layer to provide the estimated position of the bounding box.

5. The driver assistance system of claim 4, wherein:

the plurality of modules comprise a feature backbone module configured, based on the sparse radar detection distribution, to extract recurrent feature information of the detected object to generate a plurality of features; and
the plurality of inputs comprise the plurality of features output by the feature backbone module,
wherein the plurality of modules in particular comprise an object regression head module comprising a plurality of regression heads, the plurality of regression heads configured to estimate a plurality of parameters of the bounding box based on the plurality of features.

6. The driver assistance system of claim 5, wherein the plurality of regression heads comprise:

a yaw angle regression head configured, based on the plurality of features, to estimate a yaw angle of the bounding box;
a size regression head configured, based on the plurality of features, to estimate a size of the bounding box; and
an object classification regression head configured, based on the plurality of features, to estimate a classification of the bounding box and a probability of the classification,
wherein the estimate of the state of the bounding box comprises the estimated yaw angle, the size, the classification and the probability of the classification,
wherein the plurality of modules in particular comprise an estimation confidence head module configured to generate the confidence level based on at least one of i) the plurality of features, ii) the yaw angle, iii) the size, iv) the position, and v) the velocity.

7. The driver assistance system of claim 6, wherein the estimation confidence head module comprises:

a second concatenator configured to concatenate the plurality of features, the estimated yaw angle, the estimated size, position and velocity to provide a concatenated output; and
fully connected layers and a rectified linear unit configured, based on the concatenated output, to generate the confidence level.

8. The driver assistance system of claim 6 or 7, wherein:

the yaw angle regression head comprises first fully connected layers and a first rectified linear unit;
the size regression head comprises second fully connected layers and a second rectified linear unit; and
the object classification regression head comprises third fully connected layers and a support vector machine.

9. The driver assistance system of claim 5, wherein:

the plurality of modules comprise a detection offset accumulator module configured to i) subtract the absolute position of the object track centroid from absolute positions of the radar detections to generate relative positions, and ii) accumulate the relative positions; and
the feature backbone module is configured, based on the accumulated relative positions, extract recurrent feature information of the detected object to generate the plurality of features output by the feature backbone module.

10. The driver assistance system of any one of the preceding claims, wherein the hybrid object tracking module further comprises:

a ground truth comparison module configured, during at least one of calibration and training of the deep neural network model, to compare an output of a first one or more of the plurality of modules to a ground truth and generate an error value based on a result of the comparison; and
a loss function module configured to adjust operation of a second one or more of the plurality of modules based on the error value.

11. A vehicle system comprising:

the driver assistance system of claim 1;
a steering system;
a braking system; and
a propulsion system,
the driver assistance module controlling operations of at least one of the steering system, the braking system, and the propulsion system based on the estimated state of the bounding box and the confidence level, and/or
a radar sensor configured to generate the radar signal and generate the radar detections based on reflection of the radar signal off at least one of the detected object and one or more other objects.

12. A driver assistance method comprising:

receiving reflections of a radar signal emitted from a host vehicle;
generating a sparse radar detection distribution including radar detections based on the received reflections of the radar signal,
generating an object track including centroid information for a detected object relative to the host vehicle;
implementing via a plurality of modules, a deep neural network model comprising a plurality of neural networks, the deep neural network model configured to generate an estimate state of a bounding box and a confidence level of the estimated state of the bounding box based on the radar detections and the centroid information; and
performing driver assistance operations based on the estimated state of the bounding box and the confidence level.

13. The driver assistance method of claim 12, wherein:

the sparse radar detection distribution includes only peak radar detections; and
the plurality of modules are configured to generate the estimated state of the bounding box and the confidence level based on the peak radar detections.

14. The driver assistance method of claim 12 or 13, further comprising via the plurality of modules:

generating hidden features based on the object track; and

estimating a position and a velocity of a centrode of the bounding box,

wherein the estimated state of the bounding box comprises the estimated position and the estimated velocity,

in particular further comprising:

concatenating via a first concatenator a plurality of inputs including the hidden features;

receiving via fully connected layers and a rectified linear unit an output of the first concatenator;

receiving via a fully connected layer an output of the fully connected layers and the rectified linear unit; and

summing an absolute position of a centroid of the object track to an output of the fully connected layer to provide the estimated position of the bounding box.

15. The driver assistance method of claim 14, further comprising:

subtracting the absolute position of the object track centroid from absolute positions of the radar detections to generate relative positions;

accumulating the relative positions; and

based on the accumulated relative positions, extracting via a feature backbone module recurrent feature information of the detected object to generate a plurality of features,

wherein the plurality of inputs comprise the plurality of features output by the feature backbone module,

in particular further comprising, via a plurality of regression heads, estimating a plurality of parameters of the bounding box based on the plurality of features,

wherein the confidence level is generated based on at least one of i) the plurality of features output by the feature backbone module, and ii) the plurality of parameters.

**FIG. 1**

**FIG. 2**

**FIG. 3**

**FIG. 4**

EP 4 632 431 A1

**FIG. 5**

```
                        ┌─────────┐
                        │  Start  │
                        └─────────┘
                             │
600                          ▼
    ┌───────────────────────────────┐
    │ Emit Radar Signal             │
    │ From Host Vehicle             │
    └───────────────────────────────┘
602                          │
    ┌───────────────────────────────┐       618 ┌───────────────────────────────┐
    │ Receive Reflections Of        │           │ Generate Confidence           │
    │ Radar Signal And              │           │ Value Of Bounding Box         │
    │ Generate Sparse               │           │ Estimation                    │
    │ Radar Detection               │           └───────────────────────────────┘
    │ Distribution                  │                          │
    └───────────────────────────────┘       620                ▼
604                          │                      ╱────────────────╲
    ┌───────────────────────────────┐            ╱   Calibrating      ╲
    │ Generate Object Track         │           ╱   And/or Training     ╲
    │ With Centroid                 │          ╱  Deep Neural Network     ╲──── N
    │ Information                   │          ╲     Model?              ╱
    └───────────────────────────────┘           ╲                     ╱
606                          │                     ╲────────────────╱
    ┌───────────────────────────────┐                      │ Y
    │ Generate Hidden               │       622            ▼                628
    │ Features Based On             │    ┌───────────────────────────┐    ┌───────────────────────────┐
    │ The Object Track              │    │ Compare Bounding Box      │    │ Perform Driver            │
    └───────────────────────────────┘    │ Estimates To Ground       │    │ Assistance Operations     │
608                          │            │ Truth Values              │    │ Based On Bounding         │
    ┌───────────────────────────────┐    └───────────────────────────┘    │ Box State Estimation      │
    │ Subtract Absolute             │   624            │                   │ And Confidence Level      │
    │ Position Of Centroid Of       │    ┌───────────────────────────┐    └───────────────────────────┘
    │ Detected Object From          │    │ Adjust Operations Of One  │                 │
    │ Absolute Positions Of         │    │ Or More Modules Of        │    630           ▼
    │ Radar Detections              │    │ Deep Neural Network       │          ╱────────────────╲
    └───────────────────────────────┘    │ Model                     │         ╱    Continue      ╲
610                          │            └───────────────────────────┘        ╱   Providing Driver  ╲── Y
    ┌───────────────────────────────┐   626            │                       ╲    Assistance?     ╱
    │ Accumulate Relative Positions │          ╱────────────────╲              ╲                  ╱
    │ And Other Detection           │     N ╱    Calibrating     ╲               ╲──────────────╱
    │ Information Such As Range      │◄─────╱   And/or Training     ╲                    │ N
    │ Rates, RCS (radar Cross        │      ╲    Completed?       ╱
    │ Section), Etc. To Generate An  │       ╲                  ╱
    │ Accumulated Output             │        ╲──────────────╱
    └───────────────────────────────┘               │ Y
612                          │                       ▼
    ┌───────────────────────────────┐          ┌─────────┐
    │ Generate Recurrent            │          │   End   │
    │ Object Features Based         │          └─────────┘
    │ On Accumulated Output         │
    └───────────────────────────────┘
614                          │
    ┌───────────────────────────────┐
    │ Estimate Parameters Of Bounding│
    │ Box Such As Yaw Angle, Size,  │
    │ Classification, And Probability Of│
    │ The Classification Based On    │
    │ Recurrent Object Features      │
    └───────────────────────────────┘
616                          │
    ┌───────────────────────────────┐
    │ Estimate Position And         │
    │ Velocity Of Centroid Of       │
    │ Bounding Box                  │
    └───────────────────────────────┘
```

**FIG. 6**

**EP 4 632 431 A1**

<table>
<tr><td colspan="5"><strong>EUROPEAN SEARCH REPORT</strong></td><td><strong>Application Number</strong><br>EP 24 21 2612</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 209535 A1 (BOSCH GMBH ROBERT [DE]) 3 February 2022 (2022-02-03) * paragraphs [0010], [0016], [0019], [0020], [0021], [0024], [0025]; figure 1 * | 1-15 | INV.<br>G01S13/72<br>G01S7/41<br>G01S13/931<br>G06N3/045<br>G01S13/58 |
| A | US 2022/188582 A1 (ZHU WEIMENG [DE] ET AL) 16 June 2022 (2022-06-16) * paragraphs [0011], [0014], [0042]; figure 1 * | 1,4,8,12 | |
| A | US 2023/406298 A1 (GLAESER CLAUDIUS [DE] ET AL) 21 December 2023 (2023-12-21) * paragraphs [0007], [0015], [0031], [0032] * | 1,12 | |
| A | MICHAEL ULRICH ET AL: "DeepReflecs: Deep Learning for Automotive Object Classification with Radar Reflections", ARXIV.ORG, CORNELL UNIVERSITY LIBRARY, 201 OLIN LIBRARY CORNELL UNIVERSITY ITHACA, NY 14853, 19 October 2020 (2020-10-19), XP081788632, * page 3 - page 4; figure 2 * | 1,12 | **TECHNICAL FIELDS SEARCHED (IPC)**<br><br>G01S<br>G06N |
| A | HASSAN MUJTABA ET AL: "Radar Multi Object Tracking using DNN Features", 2023 IEEE INTERNATIONAL RADAR CONFERENCE (RADAR), IEEE, 6 November 2023 (2023-11-06), pages 1-6, XP034510170, DOI: 10.1109/RADAR54928.2023.10371032 [retrieved on 2023-12-29] * page 1 - page 2; figure 1 * | 1,12 | |

The present search report has been drawn up for all claims

| Place of search | Date of completion of the search | Examiner |
|---|---|---|
| Munich | 9 April 2025 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2612

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | | Publication date |
|---|---|---|---|---|
| DE 102020209535 A1 | 03-02-2022 | NONE | | |
| US 2022188582 A1 | 16-06-2022 | CN | 114676744 A | 28-06-2022 |
| | | EP | 4012603 A1 | 15-06-2022 |
| | | US | 2022188582 A1 | 16-06-2022 |
| US 2023406298 A1 | 21-12-2023 | CN | 117268413 A | 22-12-2023 |
| | | DE | 102022206130 A1 | 21-12-2023 |
| | | US | 2023406298 A1 | 21-12-2023 |

EPO FORM P0459

For more details about this annex : see Official Journal of the European Patent Office, No. 12/82